# DEMANDE DE BREVET EUROPEEN

(11) **EP 4 571 276 A1**
(43) Date de publication de la demande: **18.06.2025**
(21) Numéro de dépôt: 24218802.7
(22) Date de dépôt: 10.12.2024
(51) Int. Cl.: G01H 9/00

(54) **SYSTÈME DE DÉTECTION ACOUSTIQUE DISTRIBUÉE ET PROCÉDÉ DE DÉTECTION ASSOCIÉ**

(30) Priorité: 15.12.2023 FR 2314331
(71) Demandeur: SNCF Réseau, 93200 Saint-Denis (FR)
(72) Inventeur: PAPAIZ GARBINI, Gabriel, 75018 Paris (FR); KABALAN, Ali, 94120 Fontenay-sous-Bois (FR); HAMMI, Tarik, 59100 Roubaix (FR)
(74) Mandataire: IPAZ

(57) **Abrégé**

L'invention a pour objet un procédé et un système DAS de détection acoustique distribuée configuré pour sonder au moins une première fibre et une deuxième fibre optiques.

Le système permet de sonder chacune des fibres par des impulsions à des largeurs temporelles et fréquences paramétrables indépendamment et recevoir ensuite, par des récepteurs optiques spéciaux, un signal rétrodiffusé provenant de chaque point diffuseur tout au long des fibres sondées.

## Description

### Domaine technique

La présente invention a pour objet un système de détection acoustique distribuée configuré pour sonder au moins une première fibre et une deuxième fibre optiques distinctes.

L'invention concerne également un procédé de détection acoustique distribuée pour sonder au moins une première fibre et une deuxième fibre optiques.

La présente invention permet l'amélioration d'un dispositif de mesure de vibrations dont le capteur comprend une fibre optique.

L'invention permet en particulier l'augmentation du nombre de canaux optiques interrogés par un seul dispositif de mesure de vibration et un seul interrogateur optique.

L'invention s'applique au domaine du transport, en particulier du transport ferroviaire.

Le domaine technique concerne la surveillance des voies ferrées infrastructure pour la détection d'évènements (tels qu'une chute de rochers, un glissement de terrain, des intrusions), la maintenance préventive, la gestion de trafic ferroviaire, etc. Dans cette optique, le système comporte un interrogateur qui se branche sur des fibres optiques déployées le long des voies et qui les transforme en détecteur linéique de vibrations.

### État de la technique

Il n'y a pas d'équipement équivalent au système de détection acoustique distribuée (ou DAS, de l'anglais « *Distributed Acoustic Sensing* ») pour la mesure de vibrations car la mesure se fait en continu, distribuée le long de la fibre optique.

En effet, pour faire des mesures de vibrations et surveiller une longue distance il est nécessaire de multiplier les capteurs ponctuels le long de la zone à surveiller.

Ainsi, pour mesurer des vibrations dans le domaine ferroviaire, les techniques utilisées sont basées sur l'utilisation de capteurs ponctuels tels que les accéléromètres, les géophones, les microphones. Ces capteurs ne permettent de mesurer les vibrations qu'à l'endroit où ils sont positionnés.

Ainsi, si l'on veut mesurer les vibrations le long d'une voie ferrée sur une distance de 5 km avec une résolution de 5m, il est alors nécessaire d'installer un capteur ponctuel tous les 5m sur l'intégralité de la zone, soit 1000 capteurs.

Le système DAS se développe depuis quelques années et son atout principal est de tirer profit de la sensibilité des fibres optiques au vibrations acoustiques, et particulièrement de leur défauts structurels internes qui constituent des centres diffuseurs de la lumière rétrodiffusée. La détection étant linéique, une seule fibre peut remplacer des milliers de capteurs ponctuels successifs.

Cependant, la longueur maximale que peut surveiller un seul système n'est pas infinie, il existe une limite physique, due à la technologie elle-même. Cette limite se situe communément aux alentours de 50 km. Pour des applications ferroviaires, il est tentant d'augmenter cette longueur maximale afin de pouvoir surveiller des voies ferrées plus longues que 50 km.

En outre, il utile de pouvoir surveiller deux lignes ferroviaires ou plus avec un même et seul système DAS étant donné l'existence des locaux télécom positionnés entre les gares formant un maillage du réseau ferroviaire en France.

C'est pourquoi des travaux d'amélioration du système pour augmenter cette longueur maximale et/ou multiplier les fibres capteurs ont été menés.

Le principe exploité pour augmenter ou étendre la capacité de surveillance/détection vibratoire est la séparation/découplage physique du signal émis sur deux ou des multiples fibres afin d'augmenter la longueur de détection ou de couvrir des zones ou des directions séparées.

Plus en détail, le principe employé pour détecter les vibrations le long de la fibre consiste à envoyer depuis l'interrogateur DAS, grâce à une source laser, une impulsion lumineuse très brève au sein de cette fibre et d'enregistrer le signal rétrodiffusé qui parcourt la fibre dans le sens opposé, et qui revient donc vers l'interrogateur.

A chaque fois qu'une impulsion est envoyée dans la fibre, un signal rétrodiffusé est enregistré. En absence de vibration, le signal rétrodiffusé est invariable. Lorsqu'une vibration atteint la fibre, le signal rétrodiffusé est modifié et c'est l'exploitation de cette modification qui permet d'identifier la vibration source.

Pour pouvoir enregistrer finement la vibration source, il est nécessaire que celle-ci soit bien échantillonnée et cela est possible en envoyant les impulsions à une fréquence élevée. Plus la fréquence d'envoi (également appelée « fréquence de répétition ») des impulsions est élevée, plus le signal vibratoire enregistré sera précis et plus les composantes hautes fréquences du signal vibratoire pourront être enregistrées.

En effet, la fréquence de répétition des impulsions va limiter la fréquence maximale du signal vibratoire, à savoir, on ne pourra enregistrer qu'un signal d'une fréquence maximale égale à la moitié de la fréquence de répétition des impulsions, conformément au théorème d'échantillonnage (encore appelé théorème de Nyquist-Shannon).

Par exemple, si les impulsions sont envoyées à une fréquence inférieure à deux fois la fréquence de la vibration, l'enregistrement obtenu correspondra à un signal qui ne sera pas fidèle à la vibration, qui sera déformée.

On pressent alors qu'il suffit de s'arranger pour que la fréquence de répétition des impulsions dans la fibre soit la plus élevée possible pour être certain que l'on enregistre une vibration non déformée.

Cependant, nous ne pouvons pas choisir la fréquence de répétition des impulsions de manière arbitrairement élevée car celle-ci dépend de la longueur de la fibre optique qui est interrogée.

En effet, à chaque fois qu'une impulsion est envoyée dans la fibre optique pour générer le signal rétrodiffusé, il est nécessaire d'attendre que l'impulsion ait parcouru toute la fibre et que tout le signal rétrodiffusé soit revenu au photodétecteur correspondant avant d'en envoyer une autre, et ceci pour éviter que les signaux rétrodiffusés générés par deux impulsions successives ne se perturbent.

On en déduit que plus la fibre optique interrogée est longue et plus le rythme auquel les impulsions sont envoyées doit diminuer, limitant de fait la fréquence maximale du signal vibratoire que l'on pourra mesurer.

D'autres limitations sont imposées également par la longueur élevée de la fibre telle que la puissance optique émise qui sera réduite afin d'éviter les non-linéarités et la résolution spatiale du système DAS qui sera réduit pour compenser la perte en puissance optique.

Concernant les dispositifs DAS existants aujourd'hui, lorsqu'ils sont développés pour surveiller deux fibres ou plus, dont une des fibres optiques est de très longue portée jusqu'à 50km, le système est obligé d'imposer les contraintes dues à la plus longue fibre sur les autres fibres canaux du système, ce qui impacte directement la performance globale.

Cependant, dans le domaine ferroviaire tout particulièrement, il est très utile d'augmenter la portée de détection ainsi que de pouvoir réaliser des enregistrements de vibrations sur deux ou multiples directions à partir des locaux télécom du réseau ferroviaire.

Pour y arriver, il est possible de découpler le train d'impulsion entre deux fibres séparées.

Des exemples existent dans la littérature scientifique, seulement cela implique de limiter la performance et la qualité du signal rétrodiffusé provenant de certaines fibres, la fréquence de répétition des impulsions lumineuses serait divisée par deux ou trois ou plus par rapport à la fréquence maximale possible limitant la fréquence vibratoire maximale que l'on pourra détecter.

Le gain obtenu en augmentant la capacité de détection se fait par conséquent au détriment de la qualité du signal vibratoire que l'on enregistre : on impose un paramétrage limitant la performance au mieux sur une des directions à surveiller.

Appliquer une séparation découplage classique sur l'impulsion émise permet simplement de réaliser une multiplication du nombre de fibres sondées mais entraine forcément une détérioration et une déformation du signal vibratoire à détecter.

L'invention se propose justement de permettre d'étendre l'exploitation du système DAS sur deux ou plusieurs fibres de détection en préservant une performance maximale sur chacune de ces fibres sans détériorer le signal vibratoire.

Un des objectifs de l'invention est d'étendre la portée et l'utilisation du système DAS sans altérer la performance et la qualité des enregistrements des signaux vibratoires sources.

Autrement dit, cet objectif est de concevoir un système capable de surveiller deux lignes ferroviaires séparées avec un paramétrage indépendant et adaptatif tel que cela peut être réalisé avec deux systèmes DAS séparés, avec un avantage financier, soit environ 30% moins cher, un moindre encombrement, soit environ deux fois moins d'espace, et une meilleure performance puisque les données de deux canaux optiques arrivent sur une même carte d'acquisition, donc la manipulation algorithmique est largement facilitée.

### Exposé de l'invention

À cet effet, l'invention propose un système de détection acoustique distribuée configuré pour sonder au moins une première fibre optique et une deuxième fibre optique distincte de la première, le système de détection comportant :
- une source laser configurée pour émettre un signal optique continu cohérent ;
- un coupleur connecté à la source laser et configuré pour séparer le signal optique suivant :
   - une première branche destinée à alimenter chacune de la première et la deuxième fibres optiques à sonder ; et
   - une deuxième branche formant un oscillateur local;
caractérisé en ce que :
- la première branche comprend un étage de modulation configuré pour diviser ladite première branche en deux divisions distinctes, chaque division étant destinée à être respectivement connectée à l'une des fibres optiques à sonder au moyen d'un circulateur respectif, et configuré pour convertir le signal optique continu en impulsions, l'étage de modulation étant, en outre, configuré pour modifier indépendamment, pour chaque division, au moins l'un des paramètres des impulsions respectives parmi : un décalage en fréquence par rapport à l'oscillateur local, une largeur d'impulsion et une fréquence de répétition ;
- le système de détection acoustique comprend, en outre, des moyens de pilotage dudit étage de modulation, configurés pour délivrer, à destination de l'étage de modulation, un signal de pilotage indicatif, pour chaque division, de l'au moins un paramètre à modifier ; et
- le système de détection comprend, en outre, des moyens de détection cohérente hétérodyne comportant :
   - un premier module de détection connecté au coupleur pour recevoir l'oscillateur local, et au circulateur associé à la première fibre optique pour recevoir un premier signal rétrodiffusé par la première fibre optique, le premier module de détection étant également configuré pour délivrer un premier signal de détection représentatif d'un signal de battement optique entre l'oscillateur local et le premier signal rétrodiffusé ; et
   - un deuxième module de détection connecté au coupleur pour recevoir l'oscillateur local, et au circulateur associé à la deuxième fibre optique pour recevoir un deuxième signal rétrodiffusé par la deuxième fibre optique, le deuxième module de détection étant également configuré pour délivrer un deuxième signal de détection représentatif d'un signal de battement optique entre l'oscillateur local et le deuxième signal rétrodiffusé .

Des modes de réalisation variés de l'invention sont prévus, intégrant selon l'ensemble de leurs combinaisons possibles les différentes caractéristiques optionnelles exposées ci-après.

Selon un mode de réalisation particulier, l'étage de modulation comprend un premier modulateur configuré pour décaler la fréquence du signal optique continu cohérent d'un premier décalage, suivi d'un deuxième coupleur configuré pour diviser ladite première branche en lesdites deux divisions, chaque division comprenant un deuxième modulateur piloté par les moyens de pilotage et configuré pour :
- décaler la fréquence du signal optique continu cohérent issu du premier modulateur d'un deuxième décalage correspondant ; et
- convertir ledit signal continu en impulsions.

De manière avantageuse, le système de détection acoustique distribuée comprend, en outre, un module de multiplexage fréquentiel, connecté en sortie d'au moins un des circulateurs, et configuré pour diviser à nouveau l'une des divisions de la première branche en deux, en introduisant un décalage en fréquence dans les impulsions injectées dans au moins une des nouvelles divisions.

De manière également avantageuse, le système de détection acoustique distribuée comprend, en outre, un module de multiplexage temporel , connecté en sortie d'au moins un des circulateurs, et configuré pour diviser à nouveau l'une des divisions de la première branche en deux, en introduisant un décalage temporel entre les impulsions injectées dans les nouvelles divisions.

Selon un certain aspect particulier, les moyens de détection cohérente hétérodyne pour analyser les signaux rétrodiffusés comprennent une première photodiode équilibrée et une deuxième photodiode équilibrée, connectées respectivement à l'oscillateur local.

De manière préférentielle, le système de détection acoustique distribuée comprend un ou plusieurs amplificateurs en aval des modulateurs, configuré pour ajuster indépendamment les niveaux d'amplification du ou des signaux.

Selon un autre aspect particulier, le système de détection acoustique distribuée comprend, en outre, une carte d'acquisition des données connectée aux moyens de détection cohérente hétérodyne, configurée pour acquérir le signal de détection généré par les moyens de détection cohérente hétérodyne.

L'invention a également pour objet un procédé de détection acoustique distribuée pour sonder au moins une première fibre et une deuxième fibre optiques, dans lequel :
- une source laser émet un signal optique continu cohérent dans une première branche destinée à sonder la première et la deuxième fibres optiques, ainsi que dans une deuxième branche formant un oscillateur local ;
- un étage de modulation :
   - divise ladite première branche en deux, chaque division étant respectivement connectée à l'une des fibres optiques à sonder par des circulateurs;
   - décale dans chaque division la fréquence du signal optique continu cohérent ; et
   - convertit ledit signal continu en impulsions ;
- des moyens de pilotage ajustent indépendamment les uns des autres au moins l'un des paramètres des signaux se propageant dans chaque division, lesdits paramètres étant définis par le décalage de la fréquence intermédiaire optique, la largeur d'impulsion, la fréquence de répétition ;
- des moyens de détection cohérente hétérodyne génèrent un signal de détection représentatif de signaux rétrodiffusés par la première et la deuxième fibres optiques à partir d'un signal de battement optique entre l'oscillateur local et chacun des signaux rétrodiffusés par la première et la deuxième fibres optiques.

Des modes de réalisation variés de l'invention sont prévus, intégrant selon l'ensemble de leurs combinaisons possibles les différentes caractéristiques optionnelles exposées ci-après.

Selon un mode de réalisation particulier, les étapes réalisées dans l'étage de modulation comportent :
- le décalage par un premier modulateur de la fréquence du signal optique continu cohérent se propageant dans la première branche,
- la division par un coupleur en aval dudit premier modulateur de ladite première branche en deux,
- dans chaque division de la première branche, le décalage par un deuxième modulateur de la fréquence du signal optique continu cohérent, dans le sens inverse au sens du décalage effectué par le premier modulateur, et
- la conversion dans chaque division du signal continu en impulsions par le deuxième modulateur.

De manière avantageuse, un module de multiplexage fréquentiel, en sortie d'au moins un des circulateurs, divise à nouveau l'une des divisions de la première branche en deux, et introduit un décalage en fréquence dans les signaux des nouvelles divisions.

De manière également avantageuse, un module de multiplexage temporel, en sortie d'au moins un des circulateurs, divise à nouveau l'une des divisions de la première branche en deux, et introduit un décalage temporel au niveau des impulsions dans les signaux des nouvelles divisions.

Selon un certain aspect particulier, les moyens de détection cohérente hétérodyne pour analyser les signaux rétrodiffusés comprennent une première photodiode équilibrée et une deuxième photodiode équilibrée, connectées respectivement à l'oscillateur local.

De manière préférentielle, un ou plusieurs amplificateurs sont disposés en aval des modulateurs, de manière à ajuster indépendamment les niveaux d'amplification du ou des signaux.

Selon un autre aspect particulier, une carte d'acquisition des données connectée aux moyens de détection cohérente hétérodyne, acquiert le signal de détection généré par les moyens de détection cohérente hétérodyne.

De préférence, la première fibre et la deuxième fibre optiques sont déployées respectivement le long d'une première et d'une deuxième lignes ferroviaires.

### Brève description des figures

L'invention sera mieux comprise à la lecture de la description qui va suivre, donnée uniquement à titre d'exemple non limitatif et faite en se référant aux dessins annexés sur lesquels :
[Fig. 1] la figure 1 est un schéma illustratif d'un mode de réalisation d'un système de détection acoustique distribuée selon l'invention ;
[Fig. 2] la figure 2 est un schéma illustratif de signaux de contrôles en sortie TTL de la carte d'acquisition de données ADC ainsi que les signaux rétrodiffusés pour les deux fibres exploitées avec des réglages paramétriques optimaux ;
[Fig. 3] la figure 3 est un schéma illustratif d'un mode de réalisation d'un système de détection acoustique distribuée selon un perfectionnement comprenant un module de multiplexage en fréquence (ou FDM, de l'anglais « *Frequency Division Multiplexing* ») ;
[Fig. 4] la figure 4 est un schéma illustratif d'un mode de réalisation d'un système de détection acoustique distribuée selon un perfectionnement comprenant un module de multiplexage temporel (ou TDM, de l'anglais « *Time Division Multiplexing* ») ;
[Fig. 5] la figure 5 est un schéma illustratif d'un mode de réalisation d'un système de détection acoustique distribuée selon un perfectionnement comprenant un module de multiplexage TDM doté d'amplificateurs de manière à compenser les pertes d'insertions ;
[Fig. 6] la figure 6 est un schéma illustratif d'un mode de réalisation d'un système de détection acoustique distribuée selon un perfectionnement comprenant un module de multiplexage FDM et TDM ; et
[Fig. 7] la figure 7 est un schéma illustratif d'une architecture présentant des ramifications permettant de démultiplier les fibres à sonder.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

Avec un système DAS conventionnel à deux fibres séparées, physiquement en sortie du système, il est possible de sonder deux fibres en recevant le signal rétrodiffusé de chaque fibre sur un canal différent de la carte d'acquisition des données. Cependant, ces systèmes conventionnels imposent le même paramétrage sur les deux fibres sondées c'est-à-dire les mêmes fréquences de répétition Fᵣₑₚ, résolution spatiale RES, fréquence intermédiaire optique IF et niveau d'amplification en sortie. Ceci restreint le paramétrage du système aux limites déterminées par la fibre la plus longue. La fibre la plus courte n'est alors pas exploitée d'une manière optimale.

A contrario, le système et le procédé DAS selon l'invention sont particulièrement adaptés aux applications ferroviaires qui imposent de surveiller deux lignes ou deux directions d'une même ligne dont les extrémités se trouvent dans une des multiples salles télécoms qui relient les gares ferroviaires. Au lieu d'installer deux systèmes DAS, il devient possible d'en exploiter qu'un seul pour surveiller instantanément deux lignes ferroviaires, avec un paramétrage adapté pour chaque fibre sondée.

Le système DAS pour Distributed Acoustic Sensing selon l'invention permet de sonder chacune des fibres par des impulsions à des largeurs temporelles et fréquences paramétrables indépendamment et recevoir ensuite, par des récepteurs optiques spéciaux, un signal rétrodiffusé provenant de chaque point diffuseur tout au long des fibres sondées.

Ce signal rétrodiffusé est sensible aux vibrations que peut subir la fibre optique.

Les paramètres principaux déterminant les performances de ce système sont énoncés ci-après.

Le niveau de l'amplification à l'entrée de la fibre sous test, permet de compenser les pertes d'atténuation linéique de la fibre optique. Le niveau d'amplification est limité par l'apparition des phénomènes non-linéaires cumulatifs avec la distance. Ces phénomènes, à éviter, sont dus à l'agitation thermique provoquée par des puissances optiques incidentes élevées. Plus la portée est grande, plus le niveau d'amplification de l'impulsion émise doit être réduit.

La résolution spatiale RES de détection vibratoire est déterminée par la largeur de l'impulsion émise. Pour les grandes portées, l'augmentation de la largeur d'impulsion permet d'augmenter la quantité d'énergie émise et compenser la diminution du niveau d'amplification. Cela est fait au détriment de la résolution spatiale effective.

La fréquence intermédiaire optique IF est porteuse du signal rétrodiffusé photo-détecté au niveau du récepteur de l'interrogateur. Sa valeur affecte le choix de la fréquence d'échantillonnage de la carte d'acquisition des données ADC, qui est un convertisseur analogique numérique qui détermine la résolution numérique et la taille des données enregistrées. La largeur spectrale dans le domaine fréquentiel du signal Rayleigh rétrodiffusé dépend inversement de la largeur de l'impulsion émise, autrement dit, cela dépend directement de la résolution spatiale. Il faudrait une fréquence intermédiaire optique IF supérieure pour les résolutions spatiales RES les plus fines afin de couvrir l'intégralité du spectre du signal rétrodiffusé.

La fréquence de répétition Fᵣₑₚ, ou fréquence d'envoi des impulsions, permet d'échantillonner la source de vibration à détecter. Plus cette fréquence est élevée, plus la vibration sera détectée finement et l'analyse des données sera plus précise. Cependant, la fréquence de répétition maximum possible est limitée par la longueur de la fibre, étant donné qu'il faut attendre le retour du signal rétrodiffusé depuis le bout de la fibre sous test avant de transmettre à nouveau une impulsion « sonde » ; ceci afin d'éviter l'interférence entre signaux optiques rétrodiffusés de même fréquence. Un second facteur limitant la portée de la détection est la perte due à l'atténuation linéique de la fibre optique.

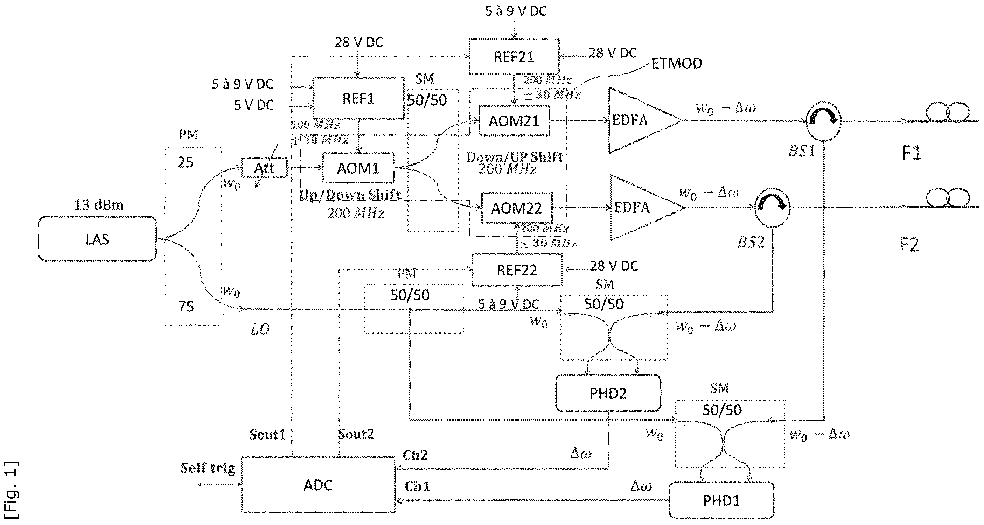

Le système de détection acoustique distribuée DAS selon l'invention et tel que représenté en figure 1 comprend une source laser LAS, un coupleur, un étage de modulation ETMOD, des circulateurs BS1, BS2, des moyens de pilotage de l'étage de modulation et des moyens de détection cohérente hétérodyne.

Comme cela apparaît sur la figure, le coupleur est connecté à la source laser (et plus précisément, en sortie de la source laser), et comporte deux sorties, respectivement connectées à une première branche (comprenant l'étage de modulation) et à une deuxième branche, reliée aux moyens de détection cohérente hétérodyne.

En outre, l'étage de modulation comporte deux sorties, chacune reliée à un premier port d'un circulateur BS1, BS2 respectif.

En outre, chaque circulateur comporte deux ports supplémentaires, un deuxième port étant destiné à être relié à une fibre optique à sonder respective, et un troisième port étant connecté aux moyens de détection cohérente hétérodyne.

De façon connue, chaque circulateur est configuré pour que la lumière injectée dans le premier port ressorte par le deuxième port, et pour que la lumière injectée dans le deuxième port ressorte par le troisième port.

La source laser LAS est configurée pour émettre un signal optique continu cohérent.

Comme indiqué précédemment, le coupleur est connecté en sortie de la source laser. En outre, le coupleur est configuré pour séparer le signal optique :
- suivant une première branche destinée à alimenter chacune de la première et la deuxième fibres optiques à sonder ; et
- suivant une deuxième branche formant un oscillateur local LO.

Par exemple, et comme cela est illustré par la figure, le coupleur est un coupleur 25/75. Dans ce cas, 25% du signal optique généré par la source laser est acheminée vers l'étage de modulation, tandis que les 75% restants du signal optique issu de la source laser forment l'oscillateur local LO.

Comme indiqué précédemment, la première branche comprend un étage de modulation ETMOD.

L'étage de modulation ETMOD est configuré pour diviser ladite première branche en deux divisions distinctes (correspondant, chacune, à une sortie respective de l'étage de modulation). En particulier, chaque division étant destinée à être respectivement connectée à l'une des fibres optiques à sonder au moyen du circulateur BS1, BS2 respectif.

L'étage de modulation est également configuré pour convertir le signal optique continu issue de la source laser en impulsions.

En outre, l'étage de modulation est configuré pour modifier indépendamment, pour chaque division, au moins l'un des paramètres des impulsions respectives parmi : un décalage en fréquence par rapport à l'oscillateur local, une largeur d'impulsion et une fréquence de répétition.

Avantageusement, l'étage de modulation ETMOD est configuré pour appliquer un décalage en fréquence optique appartenant à une plage comprise entre 0 Hz (hertz) et 60 MHz (mégahertz).

Une telle plage est avantageuse, dans la mesure où elle évite d'imposer une fréquence d'acquisition trop élevée à une carte d'acquisition ADC (décrite ultérieurement) connectée en sortie des moyens de détection cohérente hétérodyne.

Les moyens de pilotage (RF1, RF21, RF22) de l'étage de modulation, sont configurés pour délivrer, à destination de l'étage de modulation, un signal de pilotage indicatif, pour chaque division, de l'au moins un paramètre à modifier.

En outre, les moyens de détection cohérente hétérodyne comportent un premier module de détection PHD1 et un deuxième module de détection PHD2.

Le premier module de détection PHD1 est connecté, d'une part, au coupleur pour recevoir l'oscillateur local, et, d'autre part, au circulateur associé à la première fibre optique F1 pour recevoir un premier signal rétrodiffusé par la première fibre optique.

Le premier module de détection est également configuré pour délivrer un premier signal de détection représentatif d'un signal de battement optique entre l'oscillateur local et le premier signal rétrodiffusé.

Le deuxième module de détection PHD2 est connecté, d'une part, au coupleur pour recevoir l'oscillateur local, et, d'autre part, au circulateur associé à la deuxième fibre optique F2 pour recevoir un deuxième signal rétrodiffusé par la deuxième fibre optique.

De façon similaire, le deuxième module de détection est également configuré pour délivrer un deuxième signal de détection représentatif d'un signal de battement optique entre l'oscillateur local et le deuxième signal rétrodiffusé.

Avantageusement, chaque module de détection comporte une photodiode équilibrée PHD1, PHD2. Dans ce cas, chaque photodiode équilibrée est reliée, par l'intermédiaire d'un coupleur 50/50, d'une part à l'oscillateur local LO, et d'autre part au circulateur respectif.

Un tel agencement est avantageux, dans la mesure où il conduit à une réduction du bruit de grenaille, ce qui améliore la sensibilité du système.

Avantageusement, une carte d'acquisition des données ADC est connectée aux moyens de détection cohérente hétérodyne, pour acquérir chaque signal de détection généré par les moyens de détection cohérente hétérodyne.

De préférence, et comme cela est illustré par la figure 1, l'étage de modulation comprend un premier modulateur AOM1, un coupleur et deux deuxièmes modulateurs AOM21, AOM22.

Plus précisément, le premier modulateur AOM1 est configuré pour appliquer un premier décalage en fréquence au signal optique issu de la source laser LAS.

En outre, le coupleur, connecté en sortie du premier modulateur AOM1, est configuré pour diviser la première branche en deux divisions.

Enfin, chaque division comporte un deuxième modulateur AOM21, AOM22 respectif. Chaque deuxième modulateur est configuré pour appliquer un deuxième décalage en fréquence au signal optique continu issu du premier modulateur et reçu via le coupleur. En outre, chaque deuxième modulateur est configuré pour convertir ledit signal continu en impulsions.

Une telle architecture est avantageuse, dans la mesure où elle autorise des réglages indépendants, pour chacune de la première et de la deuxième division, de la fréquence de répétition et de la durée des impulsions qui s'y propagent.

Dans une telle architecture, le premier modulateur AOM1 et les deuxièmes modulateurs AOM21, AOM22 sont pilotés pour appliquer, au signal optique qui les traverse, des décalages en fréquence opposés. En d'autres terme, si le premier modulateur est piloté pour fonctionner en *upshift* (décalage en fréquence vers le haut), alors les deuxièmes modulateurs sont pilotés pour fonctionner en *downshift* (décalage en fréquence vers le bas), et inversement.

Un tel pilotage est avantageux, dans la mesure où il permet de tirer profit des temps de réponse courts des modulateurs fonctionnant à haute fréquence (par exemple, autour des 200 MHz), tout en limitant la fréquence des battements optiques au niveau module de détection, ce qui évite d'imposer une fréquence d'acquisition trop élevée à une carte d'acquisition.

Les moyens de pilotage RF21, RF22 desdits deuxièmes modulateurs sont configurés pour piloter indépendamment les uns des autres au moins un des paramètres des signaux suivants : les décalages en fréquence, la largeur des impulsions émises, la fréquence intermédiaire optique.

Tel que représenté dans l'exemple de réalisation en figure 1, les moyens de pilotage comprennent des drivers accordables, pour commander un décalage en fréquence des premier et deuxièmes modulateurs dans une plage fréquentielle de ± 30 MHz autour de la fréquence centrale 200 MHz desdits modulateurs, ce qui permet un contrôle indépendant de la fréquence intermédiaire optique IF dans une plage variant de 0 à 60 MHz. Cette valeur est choisie selon la résolution spatiale RES limite ou choisie pour un usage donné.

A noter qu'il est possible d'appliquer la même fréquence intermédiaire optique IF pour les deux canaux puisque celles-ci sont séparées physiquement sur deux canaux indépendants de la carte d'acquisition des données.

Avantageusement, des sorties TTL1 et TTL2 de la carte d'acquisition des données ADC sont connectées aux drivers des deux deuxièmes modulateurs. Ceci permet d'ajuster séparément la largeur de l'impulsion à l'entrée de ces drivers pour chacune des deux fibres à sonder, ce qui correspond à un contrôle indépendant des résolutions spatiales RES.

Avantageusement, le système représenté en figure 1 comprend un ou plusieurs amplificateurs EDFA1, EDFA2 en aval des modulateurs, de manière à ajuster indépendamment le niveau de l'amplification optique associé à la fibre, et ainsi de prévenir l'apparition de phénomène non-linéaires.

Afin de démultiplier le nombre de fibres qu'il est possible de sonder par un seul système DAS, l'invention propose des perfectionnements avec l'ajout de modules au niveau de la sortie du système menant aux fibres à sonder, c'est-à-dire en aval des circulateur BS1, BS2.

La structure de ces modules est basée sur des principes de multiplexage et démultiplexage FDM (de l'anglais « *Frequency Division Multiplexing* »*,* ou multiplexage fréquentiel) et TDM (de l'anglais « *Time Division Multiplexing* », ou multiplexage temporel).

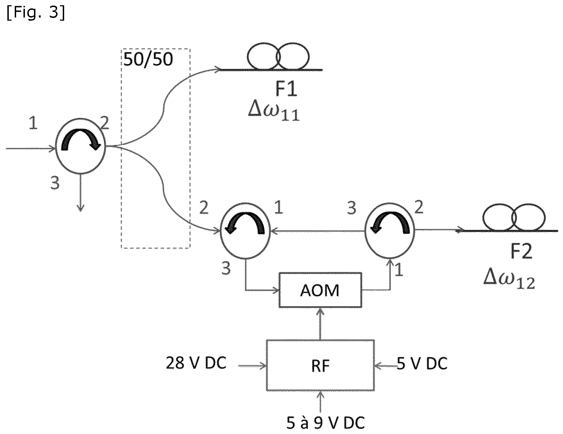

La figure 3 illustre la structure d'un exemple de module FDM, dont l'ajout dans le système DAS constitue un premier perfectionnement.

Comme illustré par la figure, le module FDM comprend un circulateur principal connecté, en aval, par son deuxième port, à un coupleur (de préférence un coupleur 50/50) pour diviser le signal optique issu du circulateur en deux.

Dans l'une des deux divisions, le signal est destiné à conserver la même fréquence que le signal optique impulsionnel injecté au niveau du premier port du circulateur, à savoir Δω11.

Dans l'autre division, le signal émis est susceptible d'être modifié en fréquence optique suivant un nouveau décalage fréquentiel Δω12, au moyen d'un modulateur (tel qu'un modulateur acousto-optique). Plus précisément, une boucle circulateur, associant deux circulateurs secondaires, est utilisée.

Plus précisément encore, un premier circulateur secondaire est connecté par sa deuxième borne en sortie du coupleur. Le premier circulateur secondaire est également connecté, par son troisième port, en entrée du modulateur, et par son premier port au troisième port d'un deuxième circulateur secondaire. En outre, le deuxième circulateur secondaire est connecté, par son premier port, en sortie du modulateur, et par son troisième port au premier port du premier circulateur secondaire.

De cette façon, le signal impulsionnel appliqué au deuxième port du premier circulateur secondaire passe alors à travers le modulateur pour être émis à travers le deuxième port du deuxième circulateur secondaire, et le signal rétrodiffusé, récupéré au niveau du deuxième port du deuxième circulateur secondaire, est acheminé jusqu'au deuxième port du premier circulateur secondaire, puis vers le coupleur, jusqu'à atteindre le circulateur principal.

Les signaux rétrodiffusés des deux divisions 1.1 et 1.2 sont mélangés et reçus en même temps au niveau du circulateur principal, mais ils sont séparables dans le domaine fréquentiel. Les données autour de chaque fréquence optique correspondent à une des deux divisions.

A noter que dans un module FDM, la fréquence de répétition Fᵣₑₚ, et la résolution spatiale RES des signaux des deux divisions sont identiques.

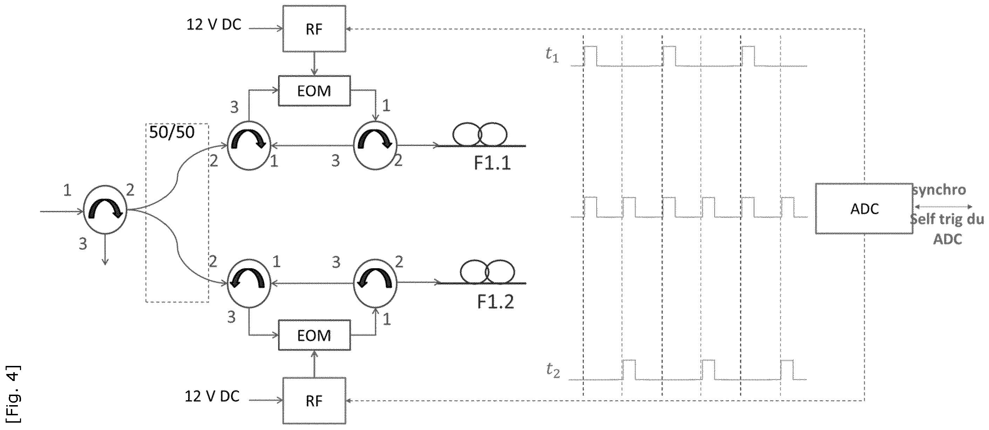

La figure 4 illustre la structure d'un exemple de module TDM, dont l'ajout dans le système DAS constitue un deuxième perfectionnement.

Comme illustré par la figure, le module TDM comprend un circulateur principal connecté, en aval, par son deuxième port, à un coupleur (de préférence un coupleur 50/50) pour diviser le signal optique issu du circulateur en deux. Chaque division comprend une boucle circulateur respective, telle que décrite précédemment, à la différence près que le modulateur est remplacé par un commutateur optique.

A la sortie du circulateur principal, le signal impulsionnel est divisé en deux. Ce module permet de séparer les deux signaux dans le domaine temporel sur un même canal d'acquisition simplifiant ainsi le traitement du signal. L'idée est de diviser la fréquence de répétition Fᵣₑₚ par deux dans le cas des deux fibres (notamment de même longueur) et d'envoyer une impulsion de manière alternative dans chacune des deux fibres 1.1 et 1.2.

Le signal impulsionnel émis sur le canal 1 du DAS est donc séparé en deux divisions. Les chemins des signaux impulsionnels et rétrodiffusés sont séparés par les boucles circulateurs. Le signal impulsionnel émis passe instantanément à l'entrée des deux modulateurs deux boucles circulateur.

Avantageusement, les commutateurs des deux boucles circulateur sont contrôlés par un générateur impulsionnel synchronisé avec l'horloge interne de la carte d'acquisition ADC permettant ainsi la commutation optique précise et rapide entre les deux divisions. Les deux signaux rétrodiffusés sont reçus alternativement sur le même canal de la carte d'acquisition ADC. Les données des impulsions impaires correspondent au canal 1.1 et celles des impulsions paires correspondent au canal 1.2. A noter qu'entre ces deux canaux, la fréquence de répétition Fᵣₑₚ, la résolution spatiale RES, la fréquence intermédiaire optique IF et le niveau d'amplification du signal émis sont les mêmes.

Avantageusement, les commutateurs optiques sont implémentés au moyen de modulateurs, en particulier des modulateurs électro-optiques (ou OEM, de l'anglais « *Electro-Optic Modulator* ») en tant que commutateurs optiques. Ceci est avantageux, dans la mesure où de tels modulateurs présentent un temps de réponse plus court, une plus grande rapidité et, surtout, une durée de vie plus élevée que les commutateurs optiques (« *optical switch* » en anglais) classiquement connus.

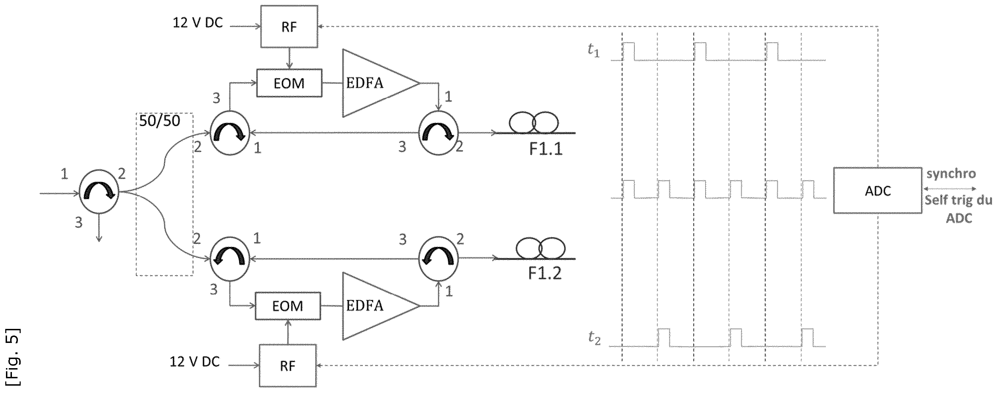

Avantageusement, et tel que représenté en figure 5, dans les modules FDM comme dans les modules TDM, des amplificateurs optiques (par exemple des amplificateurs à fibre dopée à l'erbium, dits « EDFA », pour « *Erbium Doped Fiber Amplifier* ») peuvent être ajoutés en aval des modulateurs et/ou des commutateurs optiques. Une telle caractéristique est avantageuse, dans la mesure où elle autorise à compenser les pertes d'insertions.

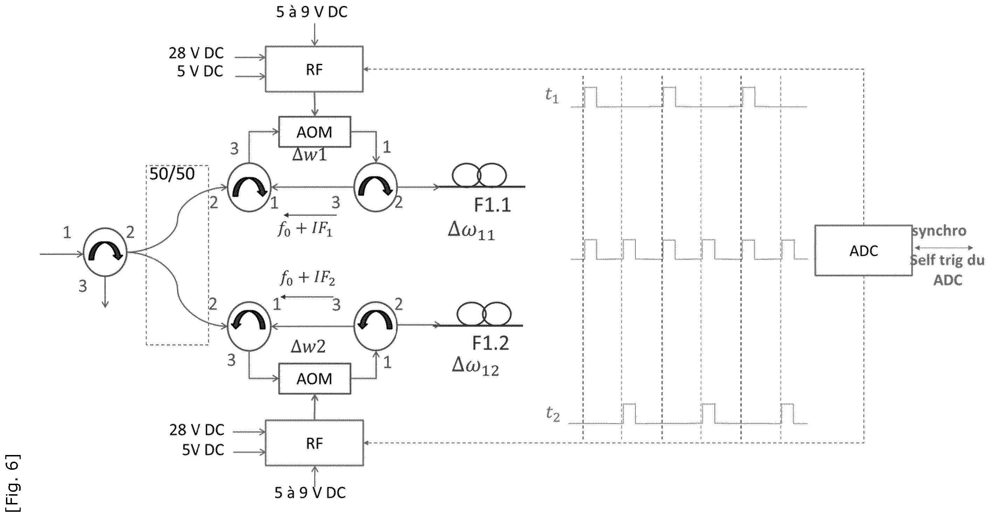

La figure 6 illustre la structure d'un exemple de modules de multiplexage fréquentiel et temporel FTDM, dont l'ajout dans le système DAS constitue un troisième perfectionnement. Dans ce cas, les modulateurs sont pilotés aussi bien pour réaliser un décalage en fréquence (en vue d'un multiplexage fréquentiel) que pour laisser passer sélectivement certaines impulsions et pas d'autres (multiplexage temporel).

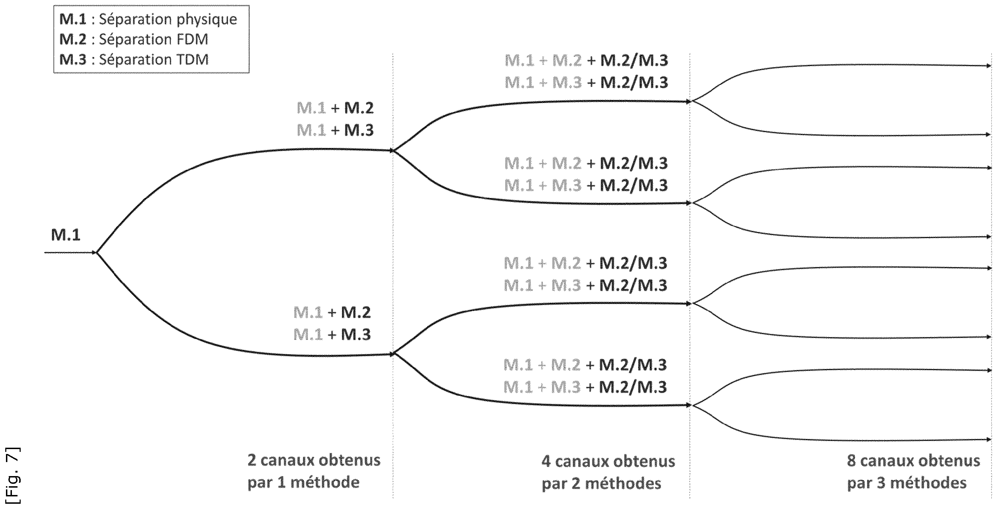

La figure 7 montre la logique de multiplication du nombre de fibres optiques en sortie du système DAS selon l'invention avec 8 fibres pour cet exemple. Les abréviations sur ce schéma sont les suivantes :
- M1 : Méthode de séparation physique (système DAS à deux canaux paramétrés indépendamment) ;
- M2 : Méthode de séparation par multiplexage fréquentiel FDM ; et
- M3 : Méthode de séparation par multiplexage temporel TDM.

Comme cela ressort de cette figure, dans le cas d'un multiplexage fréquentiel et temporel FTDM, il est possible d'interroger simultanément 2^{M} fibres optiques, chacune avec une fréquence de répétition Fᵣₑₚ donnée, en injectant, en entrée de l'étage comprenant une succession de modules FTDM, un signal optique présentant une fréquence de répétition égale à 2^{M} × Fᵣₑₚ.

### Fonctionnement

Concernant maintenant le procédé de détection acoustique distribuée, qui met en oeuvre le système DAS selon l'invention, ce procédé comprend les étapes qui suivent.

La source laser LAS émet un signal optique continu cohérent qui est séparé par un coupleur PM 25/75, suivant une première branche pour sonder les deux fibres optiques, et une deuxième branche formant un oscillateur local LO.

Le signal qui arrive dans la deuxième branche formant un oscillateur local LO est ensuite divisé en deux par un coupleur PM 50/50 afin d'assurer le battement optique avec le signal rétrodiffusé de chacune des deux fibres.

Avantageusement, les moyens de détection cohérente hétérodyne comportent deux photodiodes équilibrées PHD1, PHD2 reliées respectivement à l'une des divisions de l'oscillateur local LO.

Le signal optique continu de la première branche à 25% est modulé par l'étage de modulation pour former des impulsions optiques et, de préférence, appliquer un décalage de la fréquence intermédiaire optique IF.

Plus précisément, dans l'exemple de la figure 1, le premier modulateur AOM1 décale la fréquence du signal optique continu cohérent, puis le signal est divisé en deux, chaque division étant respectivement connectée à l'une des fibres optiques à sonder par des circulateurs BS1, BS2. Des deuxièmes modulateurs AOM21, AOM22 décalent à nouveau la fréquence des signaux des divisions et les convertissent en impulsions.

Ainsi, le premier modulateur AOM1 est utilisé en mode continu afin de créer un décalage fréquentiel du signal optique à émettre. Le coupleur optique SM 50/50 divise le signal en sortie de ce modulateur afin de pouvoir l'émettre à travers deux fibres, soit deux canaux.

Dans chacune des divisions de la première branche, le deuxième modulateur AOM2permet de moduler la lumière continue en impulsions et de créer un décalage fréquentiel d'un sens opposé à celui introduit par le premier modulateur AOM1.

Des moyens de pilotage RF21, RF22 desdits deuxièmes modulateurs, pilotent les décalages en fréquence des modulateurs indépendamment les uns des autres.

Pour ce faire, des drivers accordables sont utilisés, avec une plage fréquentielle qui varie autour de la fréquence centrale des modulateurs 200 MHz ±30 MHz, ce qui permet un contrôle indépendant de la fréquence intermédiaire optique IF dans une plage variant de 0 à 60 MHz. Cette valeur est choisie selon la résolution spatiale RES limite ou choisie pour un usage donné.

A noter qu'il est possible d'appliquer la même fréquence intermédiaire optique IF pour les deux fibres puisque celles-ci sont séparées physiquement sur deux canaux indépendants de la carte d'acquisition des données.

Avantageusement, des sorties TTL1 et TTL2 de la carte d'acquisition des données ADC sont connectées aux drivers des deux deuxièmes modulateurs. Ceci permet d'ajuster séparément la largeur de l'impulsion à l'entrée de ces drivers pour chacune des deux fibres à sonder, ce qui correspond à un contrôle indépendant des résolutions spatiales RES.

Chaque amplificateur EDFA1, EDFA2 permet d'ajuster indépendamment le niveau de l'amplification associé au canal de la fibre F1 et au canal de la fibre F2.

La carte d'acquisition des données ADC n'accepte qu'un seul signal de synchronisation et impose le même nombre d'échantillon à acquérir sur ses deux canaux d'acquisition. Pour remédier à cela, les sorties impulsionnelles TTL1 et TTL2 sont synchronisées avec l'horloge interne de la carte d'acquisition. Une seule fréquence d'envoi, et donc de répétition, peut être fixée pour les deux sorties impulsionnelles. Cette fréquence est limitée et déterminée par la fibre la plus longue.

Avantageusement et de manière à pouvoir appliquer une fréquence de répétition supérieure sur la fibre la plus courte, on choisit un mode d'émission en rafale (ou « *burst* » en anglais), permettant d'envoyer un nombre donné d'impulsions pour un seul signal de synchronisation, et acquérir par conséquence plusieurs signaux rétrodiffusés à la fois sur ce canal. Par conséquent, une fréquence de répétition maximale est choisie indépendamment pour chacun des deux canaux.

De préférence, on règle la fréquence de répétition en fonction du nombre de fibres total obtenu par multiplexage.

Quant au traitement des signaux rétrodiffusés reçu par le DAS provenant des deux fibres.

Chaque signal rétrodiffusé optique est converti en un signal électrique, après battement avec le signal de l'oscillateur local LO, par la photodiode équilibrée à couplage AC permettant de conserver uniquement le signal autour de la fréquence intermédiaire IF.

Ces signaux électriques analogiques sont reçus sur les deux canaux de la carte d'acquisition de données ADC et sont enregistrés ensuite en format binaire sur deux fichiers séparés dans un serveur dédié.

L'extraction de l'amplitude et de la phase est effectuée numériquement pour chaque fibre par une modulation numérique IQ, c'est-à-dire avec un signal ramené en bande de base et transformé en nombre complexe I+jQ, et un filtrage adéquat.

Chaque signal de synchronisation correspond à un nombre connu des signaux rétrodiffusés pour la fibre dont l'impulsion est envoyée en mode rafale (burst).

En résumé, dans le cas d'une application d'un système conventionnel à deux lignes ferroviaires d'une longueur respectivement de 5km et 20km, ce système serait limité par la fibre la plus longue, soit celle d'une longueur de 20 km, ce qui donne une fréquence de répétition Fᵣₑₚ de 5 kHz max pour les deux fibres avec un niveau d'amplification plus faible pour éviter les effets non-linéaires et une résolution réduite pour augmenter le rapport signal sur bruit.

En conséquence, la fibre d'une longueur de 5 km a subi les limites de la fibre de 20 km. En outre, la fréquence intermédiaire optique IF est constante et fixée dans la phase de conception du système donnant moins de flexibilité à ces systèmes.

Dans le cas d'une application d'un système selon la présente invention, à ces deux lignes ferroviaires, il est possible d'optimiser la performance de la fibre de 5 km également.

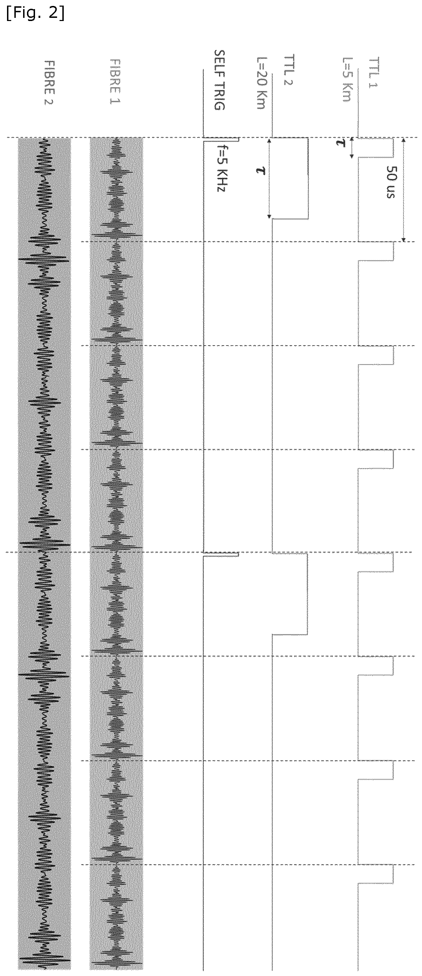

Tel que représenté en figure 2, une fréquence de répétition Fᵣₑₚ de 5 kHz est imposée par la fibre la plus longue, une synchronisation interne de la carte d'acquisition des données ADC avec son horloge interne est fixée alors à 5 kHz, un mode rafale est appliqué sur la fibre la plus courte de 5 km permettant de transmettre 4 impulsions séparés de 50 us (période du trigger divisé sur 4) pour chaque trigg ce qui multiplie la fréquence de répétition Fᵣₑₚ de cette fibre par 4 et permet d'atteindre la précision maximum avec une fréquence de répétition Fᵣₑₚ de 20 kHz. Une résolution bien plus fine peut s'appliquer sur la distance de 5 km (impulsions plus étroites) avec un niveau d'amplification plus fort possible et une fréquence intermédiaire optique IF adaptée à la haute résolution.

Le système DAS selon l'invention ainsi que le procédé de détection acoustique distribuée permettent en particulier de surveiller instantanément et indépendamment deux fibres avec des portées identiques ou différentes tout en préservant un équilibre optimal entre les principales caractéristiques de performance du système pour chacune de ces deux fibres.

En outre, ce système permet une importante adaptabilité avec les différentes résolutions, notamment avec la fréquence intermédiaire IF, permettant une maitrise appropriée de l'échantillonnage et de la taille des données enregistrées, ainsi qu'une application optimisée pour les différentes configurations ferroviaires.

A noter que la synchronisation des impulsions avec l'horloge interne de la carte d'acquisition des données permet une très haute précision pour les applications nécessitant un traitement temps réel.

Bien entendu l'invention n'est pas limitée aux exemples qui viennent d'être décrits.

## Revendications

1. Système de détection acoustique distribuée (DAS) configuré pour sonder au moins une première fibre optique (F1) et une deuxième fibre optique (F2) distinctes, le système de détection comportant :
- une source laser (LAS) configurée pour émettre un signal optique continu cohérent ;
- un coupleur connecté à la source laser et configuré pour séparer le signal optique suivant :
• une première branche destinée à alimenter chacune de la première et la deuxième fibres optiques à sonder ; et
• une deuxième branche formant un oscillateur local (LO) ;
**caractérisé en ce que** :
- la première branche comprend un étage de modulation (ETMOD) configuré pour diviser ladite première branche en deux divisions distinctes, chaque division étant destinée à être respectivement connectée à l'une des fibres optiques à sonder au moyen d'un circulateur (BS1, BS2) respectif, et configuré pour convertir le signal optique continu en impulsions, l'étage de modulation étant, en outre, configuré pour modifier indépendamment, pour chaque division, au moins l'un des paramètres des impulsions respectives parmi : un décalage en fréquence par rapport à l'oscillateur local, une largeur d'impulsion et une fréquence de répétition ;
- le système de détection acoustique comprend, en outre, des moyens de pilotage dudit étage de modulation, configurés pour délivrer, à destination de l'étage de modulation, un signal de pilotage indicatif, pour chaque division, de l'au moins un paramètre à modifier ; et
- le système de détection comprend, en outre, des moyens de détection cohérente hétérodyne comportant :
• un premier module de détection (PHD1) connecté au coupleur pour recevoir l'oscillateur local, et au circulateur associé à la première fibre optique (F1) pour recevoir un premier signal rétrodiffusé par la première fibre optique, le premier module de détection étant également configuré pour délivrer un premier signal de détection représentatif d'un signal de battement optique entre l'oscillateur local et le premier signal rétrodiffusé ; et
• un deuxième module de détection (PHD2) connecté au coupleur pour recevoir l'oscillateur local, et au circulateur associé à la deuxième fibre optique (F2) pour recevoir un deuxième signal rétrodiffusé par la deuxième fibre optique, le deuxième module de détection étant également configuré pour délivrer un deuxième signal de détection représentatif d'un signal de battement optique entre l'oscillateur local et le deuxième signal rétrodiffusé .

2. Système de détection acoustique distribuée selon la revendication 1, **caractérisé en ce que** l'étage de modulation (ETMOD) comprend un premier modulateur (AOM1) configuré pour décaler la fréquence du signal optique continu cohérent d'un premier décalage, suivi d'un deuxième coupleur configuré pour diviser ladite première branche en lesdites deux divisions, chaque division comprenant un deuxième modulateur (AOM21, AOM22) piloté par les moyens de pilotage (RF21, RF22) et configuré pour :
- décaler la fréquence du signal optique continu cohérent issu du premier modulateur d'un deuxième décalage correspondant ; et
- convertir ledit signal continu en impulsions.

3. Système de détection acoustique distribuée selon l'une quelconque des revendications précédentes, **caractérisé en ce qu'**il comprend, en outre, un module de multiplexage fréquentiel (FDM), connecté en sortie d'au moins un circulateurs (BS1, BS2), et configuré pour diviser à nouveau l'une des divisions de la première branche en deux, en introduisant un décalage en fréquence dans les impulsions injectées dans au moins une des nouvelles divisions.

4. Système de détection acoustique distribuée selon l'une quelconque des revendications précédentes, **caractérisé en ce qu'**il comprend, en outre, un module de multiplexage temporel (TDM), connecté en sortie d'au moins un des circulateurs (BS1, BS2), et configuré pour diviser à nouveau l'une des divisions de la première branche en deux, en introduisant un décalage temporel entre les impulsions injectées dans les nouvelles divisions.

5. Système de détection acoustique distribuée selon l'une quelconque des revendications précédentes, **caractérisé en ce que** les moyens de détection cohérente hétérodyne pour analyser les signaux rétrodiffusés comprennent une première photodiode équilibrée (PHD1) et une deuxième photodiode équilibrée (PHD2), connectées respectivement à l'oscillateur local (LO).

6. Système de détection acoustique distribuée selon l'une quelconque des revendications précédentes, **caractérisé en ce que** le système comprend un ou plusieurs amplificateurs (EDFA) en aval des modulateurs, configuré(s) pour ajuster indépendamment les niveaux d'amplification du ou des signaux.

7. Système de détection acoustique distribuée selon l'une quelconque des revendications précédentes, comprenant, en outre, une carte d'acquisition des données (ADC) connectée aux moyens de détection cohérente hétérodyne, configurée pour acquérir le signal de détection généré par les moyens de détection cohérente hétérodyne.

8. Procédé de détection acoustique distribuée pour sonder au moins une première fibre (F1) et une deuxième fibre (F2) optiques, dans lequel :
- une source laser (LAS) émet un signal optique continu cohérent dans une première branche destinée à sonder la première et la deuxième fibres optiques, ainsi que dans une deuxième branche formant un oscillateur local (LO) ;
- un étage de modulation :
• divise ladite première branche en deux, chaque division étant respectivement connectée à l'une des fibres optiques à sonder par des circulateurs (BS1, BS2) ;
• décale dans chaque division la fréquence du signal optique continu cohérent ; et
• convertit ledit signal continu en impulsions ;
- des moyens de pilotage (RF21, RF22) ajustent indépendamment les uns des autres au moins l'un des paramètres des signaux se propageant dans chaque division, lesdits paramètres étant définis par le décalage de la fréquence intermédiaire optique, la largeur d'impulsion, la fréquence de répétition ;
- des moyens de détection cohérente hétérodyne (PHD1, PHD2) génèrent un signal de détection représentatif de signaux rétrodiffusés par la première et la deuxième fibres optiques à partir d'un signal de battement optique entre l'oscillateur local et chacun des signaux rétrodiffusés par la première et la deuxième fibres optiques.

9. Procédé de détection acoustique distribuée selon la revendication 8, dans lequel les étapes réalisées dans l'étage de modulation comportent :
- le décalage par un premier modulateur (AOM1) de la fréquence du signal optique continu cohérent se propageant dans la première branche,
- la division par un coupleur en aval dudit premier modulateur de ladite première branche en deux,
- dans chaque division de la première branche, le décalage par un deuxième modulateur (AOM21, AOM22) de la fréquence du signal optique continu cohérent, dans le sens inverse au sens du décalage effectué par le premier modulateur, et
- la conversion dans chaque division du signal continu en impulsions par le deuxième modulateur (AOM21, AOM22).

10. Procédé de détection acoustique distribuée selon l'une quelconque des revendications 8 ou 9, dans lequel un module de multiplexage fréquentiel (FDM), en sortie d'au moins un des circulateurs (BS1, BS2), divise à nouveau l'une des divisions de la première branche en deux, et introduit un décalage en fréquence dans les signaux des nouvelles divisions.

11. Procédé de détection acoustique distribuée selon l'une quelconque des revendications 8 à 10, dans lequel un module de multiplexage temporel (TDM), en sortie d'au moins un des circulateurs (BS1, BS2), divise à nouveau l'une des divisions de la première branche en deux, et introduit un décalage temporel au niveau des impulsions dans les signaux des nouvelles divisions.

12. Procédé de détection acoustique distribuée selon l'une quelconque des revendications 8 à 11, dans lequel les moyens de détection cohérente hétérodyne pour analyser les signaux rétrodiffusés comprennent une première photodiode équilibrée (PHD1) et une deuxième photodiode équilibrée (PHD2), connectées respectivement à l'oscillateur local (LO).

13. Procédé de détection acoustique distribuée selon l'une quelconque des revendications 8 à 12, dans lequel un ou plusieurs amplificateurs (EDFA) sont disposés en aval des modulateurs, de manière à ajuster indépendamment les niveaux d'amplification du ou des signaux.

14. Procédé de détection acoustique distribuée selon l'une quelconque des revendications 8 à 13, dans lequel une carte d'acquisition des données connectée aux moyens de détection cohérente hétérodyne, acquiert le signal de détection généré par les moyens de détection cohérente hétérodyne.

15. Procédé de détection acoustique distribuée selon l'une quelconque des revendications 8 à 14, dans lequel la première fibre (F1) et la deuxième fibre (F2) optiques sont déployées respectivement le long d'une première et d'une deuxième lignes ferroviaires.
